# NEUE EUROPÄISCHE PATENTSCHRIFT

(11) **EP 1 187 882 B2**
(45) Veröffentlichungstag und Bekanntmachung des Hinweises auf die Entscheidung über den Einspruch: **15.06.2011**
(45) Hinweis auf die Patenterteilung: 11.06.2008
(21) Anmeldenummer: 00943713.8
(22) Anmeldetag: 10.05.2000
(51) Int. Cl.: C09D 4/00, C08F 230/04, C08F 230/08, C08F 220/06, C09D 4/06, C08F 290/00, C09D 5/08, C23C 22/00

(54) **CHROMFREIES KORROSIONSSCHUTZMITTEL UND KORROSIONSSCHUTZVERFAHREN**
CHROMIUM-FREE CORROSION PREVENTIVE AND CORROSION PREVENTION METHOD
AGENT DE PROTECTION CONTRE LA CORROSION EXEMPT DE CHROME ET PROCEDE DE PROTECTION CONTRE LA CORROSION

(30) Priorität: 19.05.1999 DE 19923118
(43) Veröffentlichungstag der Anmeldung: 20.03.2002
(73) Patentinhaber: Henkel AG & Co. KGaA, 40589 Düsseldorf (DE)
(72) Erfinder: KOCH, Matthias, D-40589 Düsseldorf (DE); MOTZKAT, Kerstin, D-46049 Oberhausen (DE); HACKBARTH, Karsten, D-40237 Düsseldorf (DE); SANDER, Jörg, D-42549 Velbert (DE)
(86) Internationale Anmeldenummer: PCT/EP2000/004151
(87) Internationale Veröffentlichungsnummer: WO 2000/069978

(56) Entgegenhaltungen:
- EP-A- 0 685 534
- DE-A- 3 728 720
- DE-A- 19 751 153
- DE-C- 4 122 743
- FR-A- 2 752 577
- US- - 4 748 087
- US-A- 4 748 087

## Beschreibung

Die vorliegende Erfindung betrifft ein chromfreies organisch/metallorganisches Korrosionsschutzmittel und ein Korrosionsschutzverfahren zur Behandlung von Oberflächen aus Stahl, die ggf. mit einer metallischen Beschichtung aus Zink, Aluminium, Kupfer, Nickel usw. versehen sind, oder aus Aluminium und seinen Legierungen. Es ist insbesondere geeignet zur Oberflächenbehandlung in Bandanlagen (coil-coating) zur Anwendung dieser Substrate im Haushalts- und Architekturbereich sowie in der Automobilindustrie.

Zum temporären Korrosionsschutz von verzinkten oder legierungsverzinkten Stahlbändern werden diese entweder nur mit Korrosionsschutzölen eingeölt oder bei zu erwartenden höheren Korrosionsbeanspruchungen phosphatiert oder chromatiert. Vor der endgültigen Beschichtung mit organischen Bindemitteln (Primer, Lacken) folgt in der Regel ein mehrstufiger Prozeß. Für die Verwendung von verzinktem Metallband oder Aluminium und seinen Legierungen in der Haushaltsgeräte- und Architekturindustrie wird dabei, ggf. nach vorheriger Entfernung der Ölschicht, die Metalloberfläche zuerst mit einer Korrosionsschutzschicht versehen. Die beste im Stand der Technik bekannte Korrosionsschutzmaßnahme ist eine Chromatierung, bei der die Metalloberfläche mit einer Chrom (III)- und/oder Chrom (VI)-haltigen Schicht mit in der Regel etwa 5 bis 15 mg/m² Chrom überzogen wird. Eine Phosphatierung als alternative Maßnahme zum temporären Korrosionsschutz hat zweierlei Nachteile: Zum einen kann das Aussehen der Metalloberflächen in unerwünschter Weise verändert werden. Zum anderen ist eine Phosphatierung anlagentechnisch sehr aufwendig, da sie je nach Substratmaterial eine zusätzliche Aktivierungsstufe und in der Regel nach der Phosphatierung eine Passivierungsstufe erfordert. Über den eigentlichen Korrosionsschutz hinaus gewährleistet die anorganische Beschichtung eine gute Haftung zum darauf aufgetragenen Primer. Der Primer wiederum beeinflußt nicht nur die Korrosionsschutzwirkung der anorganischen Konversionsschicht günstig, die Primerschicht bietet ihrerseits wiederum dem Decklack eine gute Haftgrundlage.

In zunehmendem Maße werden auch Bleche vom Bandveredler mit einer Vorbeschichtung ausgeliefert, die z.B. die mechanische Bearbeitung wie Stanzen, Bohren, Falzen, Profilieren und/oder Tiefziehen erleichtert. Diese Vorbeschichtung muß dem Blech dabei neben den korrosionshemmenden auch die mechanische Bearbeitung erleichternde Eigenschaften verleihen. Eine weitere Funktion solcher Vorbeschichtungen ist es, nachfolgenden ästhetischen Deckbeschichtungen eine Haftgrundlage zu bieten. Ein aus solchermaßen vorbeschichtetem Blechmaterial durch mechanische Bearbeitung hergestelltes Werkstück kann dann abschließend mit einem Decklack versehen werden. In bevorzugter Weise dient die erfindungsgemäße Vorbeschichtung weiterhin als Primer, wobei die Deckbeschichtung unmittelbar anschließend in der Coil-Coating-Anlage erfolgt. In diesem Falle wird erst das vollbeschichtete Blechmaterial der Weiterverarbeitung zugeführt. Nach dem Stand der Technik besteht das Coil-Coating-Verfahren im Wesentlichen aus drei Teilschritten. In einem ersten Schritt wird das Metallband gereinigt und mit einer (anorganischen) Vorbehandlungsschicht versehen, im zweiten Schritt erfolgt die Lackgrundierung (Primer), und im abschließenden dritten Verfahrensschritt die Decklackierung. In einigen Einsatzfällen können zusätzlich Klarlack- oder Schutzfolienüberzüge aufgebracht werden. Es sind Versuche bekannt, bereits mit dem Vorbehandlungsschritt solche Funktionen zur Verfügung zu stellen, die den Einsatz im Sinne der oben genannten Vorbeschichtung ermöglichen. Zu diesem Zweck wird beispielsweise der anorganischen Konversionsbehandlung ein geeignetes organisches Polymer hinzugefügt, das in der Lage ist, einen Oberflächenfilm mit den von einer Vorbeschichtung geforderten funktionellen Eigenschaften auszubilden.

Beispielsweise beschreibt die US-A-5 344 504 ein Beschichtungsverfahren für verzinkten Stahl, bei dem das Substrat mit einer Behandlungslösung mit folgender Zusammensetzung in Kontakt gebracht wird: 0,1 bis 10 g/l einer Tetra- bzw. Hexafluorosäure von Bor, Silicium, Titan und Zirkon oder Flußsäure, etwa 0,015 bis etwa 6 g/l Kationen von Cobalt, Kupfer, Eisen, Mangan, Nickel, Strontium oder Zink und fakultativ bis zu etwa 3 g/l eines Polymers ausgewählt aus Polyacrylsäure, Polymethacrylsäure und deren Estern. Der pH-Wert dieser Behandlungslösung liegt im Bereich von etwa 4 bis etwa 5.

Die WO 95/14117 beschreibt ebenfalls ein Verfahren zum Behandeln von Oberflächen aus Zink oder Aluminium oder deren Legierungen. Hierbei werden die Oberflächen mit einer Behandlungslösung mit einem pH-Wert unterhalb von 3 in Berührung gebracht, die einen Komplex zwischen einem Metalloxoion und einem Heteroion enthält. Dabei ist das Metalloxoion ausgewählt aus Molybdat, Wolframat und Vanadat. Das Heteroion ist ausgewählt aus Phosphor, Aluminium, Silicium, Mangan, Magnesium, Zirkon, Titan, Zinn, Cer und Nickel. Weiterhin enthält die Behandlungslösung einen organischen Filmbildner, der mit den übrigen Komponenten der Lösung kompatibel ist. Als Filmbildner kommen beispielsweise Polyacrylate wie insbesondere Polymere von Methylmethacrylat, n-Butylacrylat, Hydroxyethylacrylat und Glycerinpropoxytriacrylat in Betracht.

Die EP-A-694 593 empfiehlt die Behandlung der Metalloberflächen mit einer Behandlungslösung, die folgende Komponenten enthält: ein organisches Polymer oder Copolymer, bei dem 0,5 bis 8 % der Monomere Gruppen tragen, die mit Metallionen Verbindungen bilden können, komplexe Kationen oder Anionen von Aluminium, Calcium, Cer, Cobalt, Molybdän, Silicium, Vanadium, Zirkon, Titan, dreiwertiges Chrom und Zink, ein Oxidationsmittel wie Salpetersäure, Perchlorsäure oder Wasserstoffperoxid und eine Säure wie beispielsweise Oxalsäure, Essigsäure, Borsäure, Phosphorsäure, Schwefelsäure, Salpetersäure oder Salzsäure.

Die WO 95/04169 lehrt die Behandlung von Metalloberflächen mit einer Behandlungslösung, die mindestens folgende Komponenten enthält: Fluorokomplexe von Titan, Zirkon, Hafnium, Silicium, Aluminium und Bor, Metallionen ausgewählt aus Cobalt, Magnesium, Mangan, Zink, Nickel, Zinn, Kupfer, Zirkon, Eisen und Strontium, Phosphate oder Phosphonate sowie wasserlösliche oder wasserdispergierbare organische Filmbildner.

Die EP-A-792 922 beschreibt eine chromfreie korrosionsinhibierende Beschichtungszusammensetzung für Aluminium oder Aluminiumlegierungen, die ein filmbildendes organisches Polymer sowie (i) ein Salz ausgewählt aus Estern von seltenen Erdmetallen, Alkali- oder Erdalkalivanadat und weiterhin (ii) ein Boratsalz eines Erdalkalimetalls enthält. Als bevorzugte Polymere werden beispielsweise Epoxide einschließlich Polyimid-basierte Epoxide, Polyurethane, acrylische Polymere und Alkyd-basierte Systeme genannt. Diese Beschichtungszusammensetzung muß also außer dem organischen Filmbildner zumindest ein Borat und eine weitere Komponente enthalten, die ein Vanadat sein kann.

In der EP-A-685534 wird ein Verfahren zum Schutz eines Stahlsubstrates durch einen dünnen Film eines organisch-anorganischen Hybrid-Polymers auf der Basis eines Alkoxysilans, einer weiteren kondensierbaren Organometallverbindung der Formel M(OR)₄ sowie (Meth)acrylsäure, Wasser und einem Polymerisationsinitiator beschrieben. Die Beschichtung wird durch thermische oder Photopolymerisation bewirkt. Als Metalle für die Organometallverbindung werden Zircon und Titan genannt. Es wird angegeben, daß ein derartiger Film Stahlsubstrate gegen Korrosion und Oxidation schützt, außerdem soll das Substrat durch diese Beschichtung gegen Schock und andere mechanische Effekte geschützt werden.

Die WO 98/47631 beschreibt ein Verfahren zum Ausbessern defekter vorbehandelter Metalloberflächen. Dazu wird auf die defekten Metallflächen eine wässrig saure Lösung enthaltend Fluorometallat-Anionen, divalente oder tetravalente Kationen des Cobalts, Magnesiums, Mangans, Zinks, Nickels, Zinns, Kupfers, Zirconiums, Eisens und Strontium; Phosphor- enthaltende anorganische Oxoanionen und Phosphonatanionen und ein wasserlösliches und/oder wasserdispergierbares organisches Polymer und/oder ein polymerbildendes Harz. Die Schrift macht keine Angaben darüber, ob derartige Zusammensetzungen auch für die erstmalige Beschichtung von nicht vorbeschichtetem Metallband geeignet sind.

Die noch unveröffentlichte DE-A-1 9754108.9 beschreibt ein chromfreies wäßriges Korrosionsschutzmittel zur Behandlung von Oberflächen aus verzinktem oder legierungsverzinktem Stahl sowie aus Aluminium. Es enthält als wesentliche Komponenten Hexafluoro-Anionen des Titans und/oder Zircons, Vanadiumionen, Cobaltionen, Phosphorsäure sowie vorzugsweise zusätzlich einen organischen Filmbildner, insbesondere auf Polyacrylat-Basis. Dieses Korrosionsschutzmittel ist insbesondere zur Korrosionsschutzbehandlung von Metallbändern geeignet.

Die noch unveröffentlichte DE-19751153.8 beschreibt polymerisierbare chromfreie organische Zusammensetzungen enthaltend Titan-, Mangan- und/oder Zirconiumsalze von olefinisch ungesättigten polymerisierbaren Carbonsäuren und weiteren olefinisch ungesättigten Comonomeren sowie einen Initiator zur radikalischen Polymerisation und deren Verwendung zur organischen Coilbeschichtung von metallischen Werkstoffen. Diese nicht wäßrigen polymerisierbaren Zusammensetzungen erlauben zwar eine chromfreie Vorbehandlung von Stahlwerkstoffen mit Korrosionsschutzeigenschaften. Die Korrosionsschutzeigenschaften bedürfen jedoch für viele Praxisanwendungen der Verbesserung.

Trotz des umfangreichen Standes der Technik besteht weiterhin Bedarf an verbesserten Korrosionsschutzmitteln und Beschichtungsverfahren für Metalloberflächen, die eine chromfreie Vorbehandlung der metallischen Substrate bei gutem Korrosionsschutz unter Vermeidung starker Säuren und hoher Fluoridkonzentrationen ermöglichen. Dabei sollen die Bestandteile vorzugsweise homogen in der Zusammensetzung gelöst oder dispergiert sein, um Entmischungen während der Herstellung, des Transports, der Lagerung und der Anwendung zu vermeiden.

Die Beschichtung soll das Ausstanzen und Umformen der Bauteile aus den beschichteten Metallbändern erleichtern. Weiterhin sollen die Schichten der Metallsubstrate die weiteren Fertigungsschritte bis zum Zusammenbau der Produkte wie beispielsweise Reinigen, ggf. Phosphatieren, Nieten, Schweißen überstehen und entweder direkt oder nach der mechanischen Bearbeitung mit einem Decklack überlackierbar sein. Aus Gründen des Umwelt- und Arbeitsschutzes soll das Behandlungsverfahren ohne den Einsatz von Chromverbindungen und möglichst auch unter Ausschluß von organischen Lösungsmitteln durchführbar sein. Hauptanwendungsfelder sind die eingangs erwähnte Haushaltsgeräte- und Architekturindustrie. Die erfindungsgemäße Lösung der Aufgabe ist den Patentansprüchen zu entnehmen. Sie besteht in der Bereitstellung eines chromfreien Korrosionsschutzmittels zur organischen Beschichtung von metallischen Werkstoffen enthaltend
- mindestens eine Titan-, Silicium- und/oder Zirconiumverbindung der allgemeinen Formel (I) 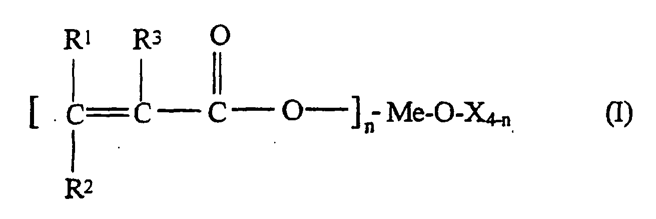 worin R¹ und/oder R² H, C₁ bis C₁₂-Alkyl, Aralkyl oder die Gruppe -CO-O-Y, R³=H oder C₁ bis C₁₂-Alkyl,
   Me = ein Titan-, Silicium- oder Zirconiumion,
   X = H, C₁ bis C₁₂-Alkyl, Aryl oder Aralkyl, Alkoxyl, Aroxyl, Sulfonyl, Phosphat, Pyrophosphat,
   Y = H, C₁ bis C₁₂-Alkyl oder Me, und n = 0 bis 4 ist,
- mindestens ein weiteres olefinisch ungesättigtes Comonomer mit mindestens zwei olefinisch ungesättigten Doppelbindungen pro Molekül,
- weitere Comonomere mit einer olefinisch ungesättigten Doppelbindung pro Molekül,
- mindestens einen Initiator zur radikalischen und/oder kationischen Polymerisation, wobei mindestens ein Initiator durch Strahlung aktivierbar ist, die kein zusätzliches Lösungsmittel enthält.

Es wird angestrebt, daß alle Inhaltsstoffe des Korrosionsschutzmittels im Verlauf des unten beschriebenen Verfahrens vollständig abreagieren und in der zu erzeugenden Beschichtung verbleiben.

Ein weiterer Gegenstand der Erfindung betrifft ein Verfahren zur korrosionsschützenden Behandlung von Stahl, der ggf. mit einer metallischen Beschichtung aus Zink, Aluminium, Kupfer, Nickel oder ähnlichen Metallen versehen ist, oder Aluminium oder dessen Legierungen, das die folgenden wesentlichen Verfahrensschritte beinhaltet:
a) die Oberfläche des Substrats wird für eine Zeitdauer zwischen 0,5 und 60 Sekunden bei einer Behandlungstemperatur zwischen 10 und 50°C. vorzugsweise 15 und 35°C mit einem Korrosionsschutzmittel der oben genannten Art in Kontakt gebracht;
b) das überschüssige Korrosionsschutzmittel wird ggf. von der Oberfläche entfernt und
c) durch geeignete Energiezufuhr für einen Zeitraum von 0,1 bis 120 Sekunden wird eine Vernetzung des polymeren Films und seine Verankerung auf der Metalloberfläche bewirkt.

In bevorzugter Weise wird das Korrosionsschutzmittel durch Fluten/Abquetschen, Spritzen/Abquetschen, Filmapplikation (z.B. im "Curtain-flow-Verfahren"), geeignete Abstreifer- oder Walzapplikationen auf die Werkstück-, bevorzugt Metallbandoberfläche, aufgebracht.

Konkrete Beispiele für die erfindungsgemäß einzusetzenden Titan-, Silicium- und/oder Zirconiumverbindungen gemäß Formel (I) sind die folgenden Verbindungen: Isopropydimethacrylisostearoyltitanat, Isopropyltri(dodecyl)benzolsulfonyltitanat, Isopropyltri(octyl)phosphatotitanat, Isopropyl(4-amino)benzolsulfonyl-di-(dodecyl)benzolsulfonyltitanat, Alkoxyttrimethacryltitanat, Isopropyltri(dioctyl)pyrophosphatotitanat, Alkoxytriacryltitanat, Isopropyltri(N-ethylendiamino)ethyltitanat, Di(cumyl)phenyloxoethylentitanat, Di(dioctyl)pyrophosphatoxoethylentitanat, Dimethyl-oxoethylentitanat, Di(butylmethyl)pyrophosphat-oxoethylen-di(dioctyl)phosphitotitanat, Di(dioctyl)phosphato-ethylentitanat, Di(butylmethyl)pyrophosphato-ethylentitanat, Tetraethyltitanat, Tetraisopropyltitanat, Tetra-n-propyltitanat, Tetra-n-butyltitanat, n-Butylpolytitanat, Tetra-2-ethylhexyltitanat, Tetraisooctyltitanat, Isostearoyltitanat, monomeres Cresyltitanat, polymeres Cresyltitanat, Octylenglykoltitanat, Titanylacetylacetonate, Diisopropoxy-bis-ethylacetoacetatotitanat, Di-n-butoxy-bis-ethylacetoacetatotitanat, Diisobutoxy-bis-ethylacetoacetatotitanat, Triethanolamintitanat, Isopropyltrüsostearoyltitanat, Addukte von 2-(N,N-dimethylamino)isobutanol, Triethylamin, (meth)acrylatfunktionalisiertem Aminderivat, methacrylamidfunktionalisiertem Aminderivat mit Di(dioctyl)phosphato-ethylentitanat, Tetraisopropyl-di(dioctyl)phosphitotitanat, Tetraoctyl-di(ditridecyl)phosphitotitanat, Tetra-(2,2-diallyloxymethyl)butyl-di(ditridecyl)phosphitotitanat, Neopentyl-(diallyl)oxy-trineodecanoyltitanat, Neopentyl-(diallyl)oxy-tri(dodecyl)benzolsutfonyltitanat, Neopentyl-(diallyl)oxy-tri(dioctyl)phosphatotitanat, Neopentyl-(diallyl)oxy-tri(dioctyl)pyrophosphatotitanat, Neopentyl-(diallyl)oxy-tri(N-ethylendiamino)ethyltitanat, Neopentyl-(diallyl)oxy-tri(m-amino)phenyltitanat, Neopentyl-(diallyl)oxy-trihydroxycaproyltitanat, Cyclo(dioctyl)pyrophosphatodioctyltitanat, Dicyclo(dioctyl)pyrophosphatotitanat, 2-(Acryloxyethoxy)trimethylsilan, N-(3-acryloxy-2-hydroxypropyl)-3-aminopropyltriethoxysilan, (3-Acryloxypropyl)dimethylmethoxysilan, (3-Acryloxypropyl)methylbis-(trimethylsiloxy)silan, (3-Acryloxypropyl)methyldimethoxysilan, (3-Acryloxypropyl)trimethoxysilan, (3-Acryloxypropyl)tris(trimethylsiloxy)silan, Acryloxytrimethylsilan, 1,3-Bis((acryloxymethyl)phenethyl)-tetramethyldisiloxan, Bis(methacryloxy)diphenylsilan, 1,3-Bis(3-methacryloxypropyl)tetrakis(trimethylsiloxy)disiloxan, 1,3-Bis(3-methacryloxypropyl)tetramethyldisiloxan, 1,3-Bis(methacryloxy)-2-trimethylsiloxypropan, Methacrylamidopropyltriethoxysilan, Methacrylamidotrimethylsilan, Methacryloxyethoxytrimethylsilan, N-(3-Methacryloxy-2-hydroxypropyl)-3-aminopropyltriethoxysilan, (Methacryloxymethyl)bis(trimethylsiloxy)methylsilan, (Methacrytoxymethyl)dimethylethoxysilan, (Methacryloxymethyl)phenyldimethylsilan, Methacryloxymethyltriethoxysilan, Methacryloxymethyltrimethoxysilan, Methacryloxymethyltrimethylsilan, Methacryloxymethyltris(trimethylsiloxy)silan, 0-Methacryloxy(polyethyleneoxy)trimethylsilan, 3-Methacryloxypropylbis(trimethylsiloxy)methylsilan, 3-Methacryloxypropyldimethylethoxysilan, Methacryloxypropyldimethylmethoxysilan, Methacryloxypropylmethyldiethoxysilan, Methacryloxypropylmethyldimethoxysilan, Methacryloxypropylpentamethyldisiloxan, Methacryloxypropylsilatran, Methacryloxypropyltriethoxysilan, Methacryloxypropyltrimethoxysilan, Methacryloxypropyltris(methoxyethoxy)silan, Methacryloxypropyltris(trimethylsiloxy)silan, Methacryloxypropyltris(trimethylsiloxy)silan, Methacryloxypropyltris(vinyldimethylsiloxy)silan, Methacryloxytrimethylsilan, Tetrakis(2-methacryloxyethoxy)silan Zr-hexafluoropentandionat, Zr-isopropoxid, Zr-methacryloylethylacetoacetat-tri-n-propoxid, Zr-2-methyl-2-butoxid, Zr-2,4-pentandionat, Zr-n-propoxid, Zr-2,2,6,6-tetramethyl-3,5-heptandionat, Zr-trifluorpentandionat, Zr-trimethylsiloxid, Dicyclopentadienylzirkoniumdiethoxid, Zr-2-ethylhexanoat, Zr-methacrylat, Zrdimethacrylat

Als Comonomere mit mindestens 2 olefinisch ungesättigten Doppelbindungen pro Molekül eignen sich eine Vielzahl von Comonomeren, z.B. Veresterungsprodukte von Alkanpolyolen, Polyesterpolyolen, Polyetherpolyolen oder Polyepoxiden, die ggf. Hydroxylgruppen enthalten, mit olefinisch ungesättigten Carbonsäuren wie z.B. Acrylsäure, Methacrylsäure, Itaconsäure, Crotonsäure, Maleinsäure, Maleinsäurehalbester, Fumarsäure, Fumarsäurehalbester oder reaktive carboxylgruppenhaltige Makromonomere oder deren Mischungen. Weiterhin eignen sich als Comonomere mit mindestens 2 reaktiven Doppelbindungen pro Molekül (Meth)acrylat-funktionelle Polysiloxane, (Meth)acrylat-funktionelle aliphatische, cycloaliphatische und/oder aromatische Polyepoxide sowie Polyurethan-Verbindungen mit reaktiven (Meth)acrylatgruppen. Typischerweise haben die vorgenannten Comonomeren mit mindestens 2 olefinisch ungesättigten Doppelbindungen pro Molekül Molekulargewichte im Bereich von 600 bis 50000, vorzugsweise zwischen 1000 und 10000.

Konkrete Beispiele für Alkan-Polyole sind 1,4-Butandiol, 1,6-Hexandiol, 1,8-Oktandiol sowie deren höhere Homologe, Glyzerin, Trimethylolpropan, Pentaerythrit sowie deren Alkoxylierungsprodukte.

Neben den vorgenannten Alkanpolyolen eignen sich als Polyole die flüssigen Polyhydroxyverbindungen mit zwei bzw. drei Hydroxylgruppen pro Molekül, wie z.B. di- und/oder trifunktionelle Polypropylenglykole im Molekulargewichtsbereich von 200 bis 6000, vorzugsweise im Bereich von 400 bis 3000. Es können auch statistische und/oder Blockcopolymere des Ethylenoxids und Propylenoxids einge-setzt werden. Eine weitere Gruppe von vorzugsweise einzu-setzenden Polyethern sind die Polytetramethylenglykole, die z.B. durch die saure Polymerisation von Tetrahydrofuran hergestellt werden, dabei liegt der Molekulargewichtsbereich der Polytetramethylenglykole zwischen 200 und 6000, vorzugsweise im Bereich von 400 bis 4000.
Weiterhin sind als Polyole die flüssigen Polyester geeignet, die durch Kondensation von Di- bzw. Tricarbonsäuren, wie z.B. Adipinsäure, Sebacinsäure, Glutarsäure, Azelainsäure, Korksäure, 3,3-Dimethylglutarsäure,Terephthalsäure, Isophthalsäure, Hexahydrophthalsäure oder Dimerfettsäure mit niedermolekularen Diolen bzw. Triolen wie z.B. Ethylenglykol, Propylenglykol, Diethylenglykol, Triethylenglykol, Dipropylenglykol, 1,4-Butandiol, 1,6-Hexandiol, 1,10-Decandiol, Dimerfettalkohol, Glyzerin oder Trimethylolpropan hergestellt werden können.
Eine weitere Gruppe der erfindungsgemäß einzusetzenden Polyol-Bausteine sind die Polyester auf der Basis von ε-Caprolacton, auch "Polycaprolactone" genannt. Es können aber auch Polyesterpolyole oleochemischer Herkunft verwendet werden. Derartige Polyesterpolyole können beispielsweise durch vollständige Ringöffnung von epoxidierten Triglyzeriden eines wenigstens teilweise olefinisch ungesättigte Fettsäureenthaltenden Fettgemisches mit einem oder mehreren Alkoholen mit 1 bis 12 C-Atomen und anschließender partieller Umesterung der Triglyzerid-Derivate zu Alkylesterpolyolen mit 1 bis 12 C-Atomen im Alkylrest hergestellt werden. Weitere geeignete Polyole sind Polycarbonat-polyole und Dimerdiole (Fa. Henkel) sowie Rizinusöl und dessen Derivate. Auch die Hydroxy-funktionellen Polybutadiene, wie sie z.B. unter dem Handelsnamen "Poly-bd" erhältlich sind, können für die erfindungsgemäßen Zusammensetzungen als Polyole eingesetzt werden.

Für die vorliegende Erfindung eignen sich auch eine oder mehrere der radikalisch polymerisierbaren Polyurethan-Verbindungen (A), (B) und/oder (C) der allgemeinen Formel (II):

(H₂C=CR¹-C(=O)-O-R²-O-C(=O)-NH-)ₙ R³ (II)

worin
R¹ = Wasserstoff oder eine Methylgruppe,
R² = eine lineare oder verzweigte Alkylgruppe mit 2 bis 6 Kohlenstoffatomen oder Alkylenoxide mit 4 bis 21 Kohlenstoffatomen und
n = 1, 2 oder 3 ist,
   (A) wobei R³ für n = 1 ist:
      - eine Arylgruppe mit 6 bis 18 Kohlenstoffatomen,
      - eine geradkettige oder verzweigte Alkylgruppe mit 1 bis 18 Kohlenstoffatomen oder
      - eine Cycloalkylgruppe mit 3 bis 12 Kohlenstoffatomen;
   (B) R³ für n = 2 ist:

      [-Q-NH-C(=O)]₂](-O-R⁴-O-C(=O)-NH-Q'-NH-C(=O))ₘ-Q-R⁴-O-]

      wobei m = 0 bis 10 ist und
      R⁴ a) ein Polycaprolactondiol-Rest
      b) ein Polytetrahydrofurfuryldiol-Rest oder
      c) ein Diol-Rest ist, der sich von einem Polyesterdiol
      ableitet, und ein Molekulargewicht von 1000 bis 20000 hat oder
   (C) R³ für n = 3 ist:

      [-Q-NH-C(=O)-O-((CH₂)₅-C(=O))ₚ-]₃R⁵.
   wobei R⁵ ein Triol-Rest eines 3 bis 6 Kohlenstoffatome enthaltenden, linearen oder verzweigten dreiwertigen Alkohols und p = 1 bis 10 ist und

Q und Q' unabhängig voneinander 6 bis 18 Kohlenstoffatome enthaltende aromatische, aliphatische oder cycloaliphatische Gruppen sind, die sich von Diisocyanaten oder Diisocyanatgemischen ableiten.

Beispiele für geeignete aromatische Polyisocyanate sind: Alle Isomeren des Toluylendiisocyanats (TDI) entweder in isomerenreiner Form oder als Mischung mehrerer Isomerer, Naphthalin-1,5-Diisocyanat, Diphenylmethan-4,4'-Diisocyanat (MDI), Diphenylmethan-2,4'-Diisocyanat sowie Mischungen des 4,4'-Diphenylmethandiisocyanats mit dem 2,4'-Isomeren oder deren Mischungen mit höherfunktionellen Oligomeren (sogenanntes Roh-MDI), Xylylen-diisocyanat (XDI), 4,4'-Diphenyl-dimethylmethandiisocyanat, Di- und Tetraalkyldiphenylmethandiisocyanat, 4,4'-Dibenzyldiisocyanat, 1,3-Phenylendiisocyanat, 1,4-Phenylendiisocyanat. Beispiele für geeignete cycloaliphatische Polyisocyanate sind die Hydrierungsprodukte der vorgenannten aromatischen Diisocyanate wie z.B. das 4,4'-Dicyclohexylmethandiisocyanat (H₁₂MDI), 1-Isocyanatomethyl-3-Isocyanato-1,5,5-Trimethyl-cyclohexan (Isophoron-Diisocyanat, IPDI), Cyclohexan-1,4-Diisocyanat, hydriertes Xylylen-Diisocyanat (H₆XDI), 1-Methyl-2,4-diisocyanato-cyclohexan, m- oder p-Tetramethylxylendiisocyanat (m-TMXDI, p-TMXDI) und Dimerfettsäure-Diisocyanat. Beispiele für aliphatische Polyisocyanate sind Tetramethoxybutan-1,4-diisocyanat, Butan-1,4-diisocyanat, Hexan-1,6-Diisocyanat (HDI), 1,6-Diisocyanato-2,2,4-Trimethylhexan, 1,6-Diisocyanato-2,4,4-Trimethylhexan, Butan-1,4-Diisocyanat sowie 1,12-Dodecandiisocyanat (C₁₂DI).

Als Epoxidharz-Bausteine für die olefinisch ungesättigten Comonomeren mit mindestens zwei olefinisch ungesättigten Doppelbindungen pro Molekül eignen sich eine Vielzahl von Polyepoxiden, die mindestens 2 1,2-Epoxigruppen pro Molekül haben. Das Epoxid-Äquivalent dieser Polyepoxide kann zwischen 150 und 4000 variieren. Die Polyepoxide können grundsätzlich gesättigte, ungesättigte, cyclische oder acyclische, aliphatische, alicyclische, aromatische oder heterocyclische Polyepoxidverbindungen sein. Beispiele für geeignete Polyepoxide schließen die Polyglycidylether ein, die durch Reaktion von Epichlorhydrin oder Epibromhydrin mit einem Polyphenol in Gegenwart von Alkali hergestellt werden. Hierfür geeignete Polyphenole sind beispielsweise Resorcin, Brenzkatechin, Hydrochinon, Bisphenol A (Bis-(4-Hydroxy-phenyl)-2,2-propan)), Bisphenol F (Bis(4-hydroxyphenyl)methan), Bis(4-hydroxyphenyl)-1,1-isobutan, 4,4'-Dihydroxybenzophenon, Bis(4-hydroxyphenyl)-1,1-ethan, 1,5-Hydroxynaphthalin. Weitere prinzipiell geeignete Polyepoxide sind die Polyglycidylether von Polyalkoholen oder Diaminen. Diese Polyglycidylether leiten sich von Polyalkoholen wie Ethylenglykol, Diethylenglykol, Triethylenglykol, 1,2-Propylenglykol, 1,4-Butylenglykol, Triethylenglykol, 1,5-Pentandiol, 1,6-Hexandiol oder Trimethylolpropan ab. Weitere Polyepoxide sind Polyglycidylester von Polycarbonsäuren, beispielsweise Umsetzungen von Glycidol oder Epichlorhydrin mit aliphatischen oder aromatischen Polycarbonsäuren wie Oxalsäure, Bernsteinsäure, Glutarsäure, Terephthalsäure oder Dimerfettsäure. Weitere Epoxide leiten sich von den Epoxidierungsprodukten olefinisch ungesättigter cycloaliphatischer Verbindungen ab.

Konkrete Beispiele für erfindungsgemäß einzusetzende di-, tri- oder polyfunktionelle (Meth)acrylate sind die folgenden Verbindungen:
1,3-Butylenglykoldi(meth)acrylat, 1,4-Butandioldi(meth)acrylat, 1,6-Hexandiol di(meth)acrylat, Bisphenol-A-Epoxid-Di(meth)acrylat, alkoxyliertes Bisphenol-A-Di(meth)acrylat, Polyalkylenglykoldi(meth)acrylat, Trialkylenglycoldiacrylat, Tetraalkylenglycoldi(meth)acrylat, Neopentylglycoldi(meth)acrylat, alkoxyliertes Neopentylglykoldi(meth)acrylat, Trialkylolalkantri(meth)acrylat, alkoxyliertes Trialkylolalkantri(meth)acrylat, Glycerinalkoxytri(meth)acrylat, Pentaerythritoltri(meth)acrylat, Tris-(2-hydroxyalkyl)isocyanurat-tri(meth)acrylat, säuregruppenhaltige Tri(meth)acrylatverbindungen, Trimethylolpropantri(meth)acrylat, Trisalkoxy-Trimethylolpropantri(meth)acrylat, Ditrimethylolpropan-tetra(meth)acrylat, Pentaerythritoltetra(meth)acrylat, alkoxyliertes Pentaerythritoltetra(meth)acrylat, Dipentaerythritolpenta(meth)acrylat, Dipentaerythritolhexa(meth)acrylat, wobei "alkylen" ethylen, propylen oder butylen und "alkoxy" ethoxy, 1,2- oder 1,3-propoxy oder 1,4-butoxy bedeuten.

Zusätzlich können noch die folgenden (Meth)acrylat-Monomeren mitverwendet werden: Aminmodifizierte Polyetheracrylat-Oligomere, Carboxy-funktionalisierte multifunktionelle (Meth)acrylate, multifunktionelle Melaminacrylate, difunktionelle Siliconacrylate

Als monofuntionelle Comonomere können die folgenden (Meth)acrylate mit verwendet werden: n-/iso-Alkyl(meth)acrylat, Cyclohexyl(meth)acrylat, 4-tert.-Butylcyclohexyl(meth)acrylat, Dihydrodicyclopentadienyl(meth)acrylat, Tetrahydrofurfuryl(meth)acrylat, Isobomyl(meth)acrylat (IBOA), β-Carboxyethyl-(meth)acrylat (β-CEA); Mono(meth)acryloylalkylphthalate, -succinat, -maleinat; 2-(2-Ethoxyethoxy)-ethyl(meth)acrylat, 2-Phenoxyalkyl(meth)acrylat, Alkandiolmono(meth)acrylat, Allyl(meth)acrylat, Hydroxyalkyl(meth)acrylat, 2,3-Epoxyalkyl(meth)acrylat, N,N-Dialkylaminoalkyl(meth)acrylat, N,N-Dialkyl(meth)acrylamid, Monoalkoxytrialkylenglycol(meth)acrylat, Monoalkoxyneopentylglycol-alkyloxylat(meth)acrylat, Polyalkylenglycol(meth)acrylat, alkoxyliertes Nonylphenol(meth)acrylat, wobei die Alkylgruppen 1 bis 12 C-Atome aufweisen können und "alkoxy" ethoxy, 1,2- oder 1,3-propoxy oder 1,4-butoxy bedeuten.

Vorzugweise werden die erfindungsgemäßen Zusammensetzungen durch einen UV- oder Elektronenstrahl-Härtungsprozeß ausgehärtet. Je nach eingesetzten Initiatoren und Monomeren kann dieser Aushärtungsprozeß nach einem radikalischen oder kationischen Polymerisations-Prozeß ablaufen.

Als Initiatoren für diese radikalische bzw. kationische Polymerisation eignen sich beispielsweise die folgenden Initiatoren: 1-Hydroxycyclohexylphenylketon, (η-5,2,4-Cyclopentadien-1-yl)-[(1,2,3,4,b,6-η)-(1-methylethyl)-benzol]eisen(1+)-hexafluorphosphat(1-), 2-Benzyldimethylamino-1-(4-morpholinophenyl)-butanon-1, Benzildimethyl-ketal-dimethoxyphenylacetophenon, Bis(η5-2,4-cyclopentadien-1-yl)-bis[2,6-difluoro-3-(1H-pyrrol-1-yl)phenyl]-titan, Bis(2,4,6-trimethylbenzoyl)-phenylphosphinoxid (BAPO2), 2-Methyl-1-[4-(methylthio)-phenyl]-2-morpholinopropanon-1, 1-(4-(1-Methylethyl)-phenyl)-2-hydroxy-2-methyl-1-propan-1-on, 2-Hydroxy-2-methyl-1-phenylpropan-1-on, 1,2-Diphenylethan-1,2-dion, 1-[4-(2-Hydroxyethoxy)-phenyl]-2-hydroxy-2-methyl-1-propan-1-on, (2,4,6-Trimethylbenzoyl)-diphenylphosphinoxid, α-Hydroxybenzylphenylketon, Triarylsulfoniumhexafluoroantimonat-salze, Triarylsulfoniumhexafluorophosphat-salze, Oligo-(2-hydroxy-2-methyl-1-[4-(1-methylvinyl)phenyl]propanon), 1-Propanon,2-hydroxy-2-methyl-1-[4-(1-methylethenyl)phenyl]-,homopolymer, Phosphonsäure-benzoyl-bis(2,6-dimethylphenyl)ester, Benzophenon, Methyl-ortho-benzoylbenzoat, Methylbenzoylformat, 2,2-Diethoxyacetophenon, 2,2-Di-sec-butoxyacetophenon, [4-(4-methylphenylthio)phenyl]phenylmethanon-4-benzoyl-4'-methyldiphenylsulfid, p-Phenylbenzophenon, 2-lsopropylthioxanthon, 2-Methylanthrachinon, 2-Ethylanthrachinon, 2-Chloroanthrachinon, 1,2-Benzanthrachinon, 2-t-Butylanthrachinon, 1,2 Benzo-9,10-anthrachinon, Benzil, Benzoin, Benzoin methylether, Benzoinethylether, Benzoinisopropylether, alpha-Methylbenzoin, alpha-Phenylbenzoin, Michler's Keton, Benzophenon, 4,4'-Bis-(diethylamino)benzophenon, Acetophenon, Diethoxyphenylacetophenon, Thioxanthon, Diethylthioxanthon, 1,5-Acetonaphtalin, Ethyl-p-dimethylaminobenzoat, Benzilketone, 2,4,6-Trimethylbenzoyldiphenyl-phosphinoxide, Benzilketal-(2,2-dimethoxy-1,2-diphenylethanon), 1-Hydroxycyclohexylphenylketon, 2-Methyl-1 [4-(methylthio)phenyl]-2-morpholinopropanon-1 und/oder 2-Hydroxy-2-methyl-1-phenyl-propan-1 und/oder deren Mischungen. Diese können ggf. mit weiteren Radikalinitiatoren von Peroxid- oder Azotyp und/oder mit aminischen Beschleunigern kombiniert werden.

Wenn vorzugsweise die kationische Polymerisation Verwendung finden soll, können auch Vinylether als Comonomere eingesetzt werden.

Beispiele für derartige Vinylether sind Vinylmethylether, Vinylethylether, Vinylpropylether, Vinylisobutylether, Vinyldodecylether, Vinyloctadecylether, Vinylcyclohexylether, Vinyl-4-hydroxybutylether, Butandiol-1,4-divinylether, 1,4-Cyclohexandimethanoldivinylether, Diethylenglykoldivinylether, Triethylenglykoldivinylether, aber auch die folgenden Vinylverbindungen N-Vinylpyrrolidon, Vinylcaprolactam, 1-Vinylimidazol, Divinylethylenharnstoff.

Die Hauptkomponenten der erfindungsgemäßen Zusammensetzungen werden dabei in den folgenden Mengenbereichen verwendet:
a) 1 bis 80 Gew.%, vorzugsweise 1 bis 40 Gew.% Organo-Titan-, -Silicium- und/oder - Zirconium-Verbindung gemäß Formel (I)
b) 20 bis 95 Gew.%, vorzugsweise 40 bis 90 Gew.% Comonomer mit mindestens 2 Doppelbindungen pro Molekül
c) bis 40 Gew.% Comonomer mit 1 Doppelbindung pro Molekül
d) 0,1 bis 10 Gew.% eines Initiators oder einer Mischung von Initiatoren
e) 0 bis 30 Gew.% weitere Additive und Hilfsstoffe.

Dem Fachmann ist geläufig, daß die vorstehend genannten Komponenten, insbesondere die metallorganischen Verbindungen, Reaktionen miteinander eingehen können und als technische Produkte Verunreinigungen enthalten können, so daß sie in der Behandlungszusammensetzung in der Form vorliegen, die unter den genannten Bedingungen dem thermodynamischen oder kinetischen Gleichgewicht entsprechen.

Als weitere Additive können die erfindungsgemäßen Zusammensetzungen Leitfähigkeitspigmente oder leitfähige Füllstoffe enthalten wie z.B. Eisenphosphid (Ferrophos), Vanadiumcarbid, Titannitrid, Ruß, Graphit, Molybdändisulfid oder mit Zinn oder Antimon dotiertes Bariumsulfat. Eisenphosphid ist dabei besonders bevorzugt. Die Leitfähigkeitspigmente oder Füllstoffe werden zur Verbesserung der Schweißbarkeit oder zur Verbesserung der Beschichtung mit Elektrotauchlacken zugesetzt. Diese anorganischen Hilfsstoffe sollen in feinverteilter Form vorliegen, das heißt ihre mittleren Teilchendurchmesser betragen zwischen 0,005 und 5 µm, vorzugsweise zwischen 0,05 und 2,5 µm. Die Hilfsstoffe werden in Anteilen zwischen 0 und 30 Gew.% verwendet.

Weiterhin können die Zusammensetzungen Additive zur Verbesserung des Umformverhaltens enthalten, dies sind beispielsweise wachsbasierte Derivate auf Basis von natürlichen oder synthetischen Wachsen, z.B. Polyethylen-, Polytetrafluorethylen (PTFE)-Wachse oder Wachsderivate.

Bei Anwendung insbesondere auf Metallbandoberflächen wird die Zusammensetzung in an sich bekannter Weise durch Walzenapplikation (Chem-Coating), Abstreifen, Filmziehen (Curtain-flow-Verfahren), Tauchen/Abquetschen oder Spritzen/Abquetschen auf ein - ggf. metallisch beschichtetes - Stahlband bzw. (legiertes) Aluminiumband aufgebracht. Die Anwendung erfolgt bei Temperaturen zwischen 10 und 50°C, vorzugsweise zwischen 15 und 35 °C.

Vorzugsweise werden die erfindungsgemäßen Zusammensetzungen durch ultraviolette (UV) Strahlung oder durch Elektronenstrahlung gehärtet bzw. vernetzt. Geeignete UV-Strahlung hat Wellenlängen zwischen 200 und 800 nm, vorzugsweise zwischen 250 und 450 nm. Die Strahlungsintensität richtet sich dabei nach der gewünschten Applikationsgeschwindigkeit, dem Initiatorsystem und der Comonomerzusammensetzung und kann durch den Fachmann leicht bestimmt werden.
Für die alternativ zu verwendende Elektronenstrahlung kann jede konventionell Elektronenstrahlquelle eingesetzt werden, beispielhaft genannt seien Beschleuniger vom Typ des van de Graaff-Generators, Linearbeschleunigers, Resonanztransformators, oder Dynatrons. Die Elektronenstrahlung hat dabei eine Energie von etwa 50 bis 1000 keV, vorzugsweise zwischen 100 und etwa 300 keV, die resultierend Strahlendosis liegt zwischen etwa 0,1 und 100 Mrad.

Die Bildung des Films, die Vernetzung dieses Films sowie die Verankerung auf der metallischen Oberfläche findet bevorzugt durch an sich bekannte UV-Bestrahlung oder Elektronen-Bestrahlung statt. Die Bestrahlungsdauer liegt dabei zwischen 0,1 und 120 Sekunden, vorzugsweise zwischen 1 und 30 Sekunden. Die flächenbezogene Masse der Beschichtung nach erfolgter Vernetzung beträgt dabei 0,1 bis 10, vorzugsweise 0,5 bis 5,0 g/m². Ggf. kann die Filmbildungsreaktion auch durch Zufuhr thermischer Energie unterstützt werden.

Die so erzeugten Schichten können dabei mit den in der Haushaltsgeräte- und/oder Architekturindustrie üblichen flüssigen oder pulverförmigen Decklacksystemen beschichtet werden. Weiterhin kann die erfindungsgemäße Korrorionsschutzschicht sofort mit typischen Band-Decklackierungen beschichtet werden. Die so erzeugten Schichten schützen das Blech und geben ausreichenden Korrosionsschutz gemäß DIN 53167 und ausreichende Substrathaftung gemäß DIN 53151. Die Korrosionsbeständigkeit von Materialien, die mit der erfindungsgemäßen Korrosionsschutzzusammensetzung behandelt wurden, erreicht die mit einer konventionellen Behandlung erzielbaren Werte.

Erfolgt die erfindungsgemäße Behandlung unmittelbar nach einer metallischen Oberflächenveredlung, z.B. einer elektrolytischen Verzinkung oder einer Schmelztauchverzinkung von Stahlbändern, so können die Bänder ohne vorherige Reinigung mit der erfindungsgemäßen Behandlungslösung bzw.- dispersion in Kontakt gebracht werden. Wurden die zu behandelnden Metallbänder vor der erfindungsgemäßen Beschichtung jedoch gelagert und/oder transportiert, so sind sie in der Regel mit Korrosionsschutzölen versehen oder zumindest so weitgehend verschmutzt, daß eine Reinigung vor der erfindungsgemäßen Beschichtung erforderlich ist. Dies kann mit gebräuchlichen schwach bis stark alkalischen Reinigern, bei Aluminium und seinen Legierungen auch mit sauren Reinigern erfolgen.

Nachfolgend soll die Erfindung anhand einiger Ausführungsbeispiele näher erläutert werden. Bei den Zusammensetzungen sind dabei alle Mengenangaben Gewichtsteile, wenn nicht anders angegeben.

Die Reinigung der Metallbleche erfolgte (über 15 sec.) mit einer 60 °C warmen 2.5 %igen Ridoline 72-Lösung (Fa. Henkel). Anschließend wurde mit vollentsalztem Wasser nachgespült und die Bleche getrocknet.

Die in der Tabelle 1 aufgeführten einzelnen Komponenten wurden in der Regel in der genannten Reihenfolge durch Rühren bei Raumtemperatur zu einer homogenen Mischung verarbeitet.

Durch Aufrakeln wurden die so hergestellten UV-härtenden Formulierungen appliziert. Derart präparierte Bleche wurden danach durch UV-Strahlung ausgehärtet, bis sie klebfrei waren. Anschließend wurde ein BASF-Polyesterdecklack mit einem Rakel aufgetragen und gemäß Verarbeitungsvorschrift des Herstellers eingebrannt.

| Beispiel | Zusammensetzung | Schichtgewicht | SST-Lackunterwanderung wanderung | | | Gitterschnitt DIN 53 151 [mm] | |
|---|---|---|---|---|---|---|---|
| | | | DIN 53 167 | | | Tiefung | |
| | | [g/m²] | Std. | Ritz | Kante | Ohne | Mit |
| | | | | | | | a) 3mm |
| | | | | [mm] einseitig | [mm] | | b) 6mm |
| 1 | 93.0 % Photomer 4017 (Henkel KGaA) | 9.5 | 100 | 10.6 | 9.8 | 4 | a) - |
| | 7.0 % Initiator (-gemisch) | | | | | | b) - |
| 2 | 67.9 % Photomer 4017 (Henkel KGaA) | 15 | 100 | 0.8 | 1.6 | 0 | a) 1 |
| | 27.0 % Ti-Organylverbindung 5.1 % Initiator (-gemisch) | | | | | | b) - |
| 3 | 93.0 % Ebecryl 408 (ucb Chemicals) | 35-40 | 100 | 4.5 | 2.4 | 3 | a) - |
| | 7.0 % Initiator (-gemisch) | | | | | | b) - |
| 4 | 67.9 % Ebecryl 408 (ucb Chemicals) 27.0 % Ti-Organylverbindung 5.1 % Initiator -gemisch | 10 | 100 | 0.5 | 2.4 | 0 | a) 0 |
| | | | | | | | b) 2 |
| | | | | | | | |
| 5 | 93.0 % Sartomer SR 9051 (Cray Valley) | 6 | 100 | 1 | 2.7/1. 4 | 0 | a) 0 |
| | 7.0 % Initiator (-gemisch) | | | | | | b) 0 |
| 6 | 67.9 % Sartomer SR 9051 (Cray Valley) | 5 | 100 | 1.0 | 2.1 | 0 | a) 0 |
| | 27.0 % Ti-Organylverbindung | | | | | | b) 0 |
| | 5.1 % Initiator (-gemisch) | | | | | | |
| 7 | 93.0 % Photomer 8061 (Henkel KGaA) | 6 | 100 | komplettes Abplatzen | | 2 | a) 5 |
| | 7.0 % Initiator (-gemisch) | | | | | | b) - |
| 8 | 67.9 % Photomer 8061 (Henkel KGaA) | 3 | 100 | 3 | 2.4 | 0 | a) 0 |
| | 27.0 % Ti-Organylverbindung | | | | | | b) 0 |
| | 5.1 % Initiator (-gemisch) | | | | | | |
| 9 | 93.0 % Photomer 4149 (Henkel KGaA) | 7 | 100 | 5 | 3.3 | 0 | a) 5 |
| | 7.0 % Initiator (-gemisch) | | | | | | b) 5 |
| 10 | 67.9 % Photomer 4149 (Henkel KGaA) | 5 | 100 | 0.8 | 2.4 | 0 | a) 0 |
| | 27.0 % Ti-Organylverbindung | | | | | | b) 0 |
| | 5.1 % Initiator (-gemisch) | | | | | | |
| 11 | 93.0 % Laromer PO 84 F (BASF AG) | 4-5 | 100 | 8 | 3 | 5 | a) 5 |
| | 7.0 % Initiator (-gemisch) | | | | | | b) 5 |
| 12 | 67.9 % Laromer PO 84 F (BASF AG) | 3 | 100 | 0.8 | 1.5 | 1 | a) 1-2 |
| | 27.0 % Ti-Organylverbindung | | | | | | b) 2 |
| | 5.1 % Initiator (-gemisch) | | | | | | |
| 13 | 93.0 % Sartomer C 2000 (Cray Valley) | 2-3 | 100 | 0.9 | 1.4 | 1 | a) 2 |
| | 7.0 % Initiator (-gemisch) | | | | | | b) 2 |
| 14 | 67.9 % Sartomer C 2000 (Cray Valley) | 2 | 100 | 1.6 | 1.7 | 1 | a) 1 |
| | 27.0 % Ti-Organylverbindung | | | | | | b) 1 |
| | 5.1 % Initiator (-gemisch) | | | | | | |
| 15 | 93.0 % Photomer 6230 (Henkel KGaA) | 35-63 | | komplettes Abplatzen des PE-Decklacks | | - | a) - |
| | 7.0 % Initiator (-gemisch) | | | | | | b) - |
| 16 | 67.9 % Photomer 6230 (Henkel KGaA) | 3-7 | 100 | 0.3 | 1.2 | 0 | a) 0 |
| | 27.0 % Ti-Organylverbindung | | | | | | b) 1 |
| | 5.1 % Initiator (-gemisch) | | | | | | |

### Anmerkungen zu den Ergebnissen der Tabelle:

Als Ti-Organylverbindung wurde handelsübliches Ti-trimethacrylatmethoxyethoxyethoxid verwendet, als Initiatorgemisch wurde eine Mischung aus 2,4,6-Trimethylbenzoyldiphenylphosphinoxid und 1-Hydroxycyclohexylphenylketon verwendet. Die Beispiele 1-14 sind nicht erfindungsgemäß.
Das Beispiel 16 ist erfindungsgemäß und zeigt gute Korrosionsschutzwirkung nach Salzsprühtest gemäß DIN 53167 und gute Substrathaftung im Gitterschnitt nach DIN 53151 mit und ohne Tiefung, während das Vergleichsbeispiel 15 unbefriedigende Korrosionsschutzwirkung und Substrathaftung aufweist. Zusammensetzungen mit Titanmethacrylat-trüsoproxid, Titanmethacryloxyethyl-acetoacetattriisopropoxid, (2-methacryloxiethoxi)-triisopropoxititanat zeigten ebenfalls gute Ergebnisse. Durch Verwendung der folgenden Initiatoren bzw. Initiatorgemische von Benzildimethylketal, Benzophenon, 2-Hydroxi-2-methyl-1-phenylpropan-1-on leßen sich ebenfalls gute Aushärtungsgeschwindigkeiten erzielen.

## Patentansprüche

1. Polymerisierbare Chrom freie Zusammensetzung zur organischen Beschichtung von metallischen Werkstoffen enthaltend
(a) mindestens eine Verbindung der allgemeinen Formel (I) 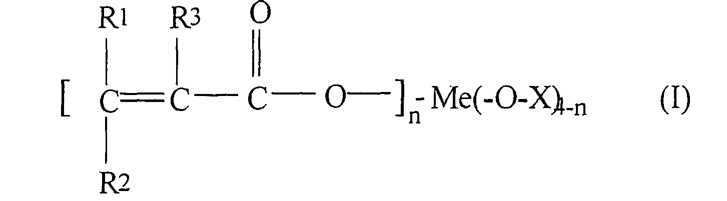
worin R¹ und/oder R² H, C₁ bis C₁₂-Alkyl, Aralkyl oder
die Gruppe -CO-O-Y, R³ = H oder C₁ bis C₁₂-Alkyl,
Me = ein Titan-, Silicium- oder Zirconiumion,
X = H, C₁ bis C₁₂-Alkyl, Aryl oder Aralkyl, Alkoxyl, Aroxyl, Sulfonyl, Phosphat, Pyrophosphat,
Y = H, C1 bis C12-Alkyl oder Me, und n = 0 bis 4 ist,
(b) mindestens ein weiteres olefinisch ungesättigtes Comonomer mit mindestens zwei olefinisch ungesättigten Doppelbindungen pro Molekül
(c) weitere Comonomere mit einer olefinisch ungesättigten Doppelbindung pro Molekül,
(d) mindestens einen Initiator zur radikalischen und / oder kationischen Polymerisation, wobei mindestens ein Initiator durch Strahlung aktivierbar ist,
die kein zusätzliches Lösungsmittel enthält.

2. Zusammensetzung nach Anspruch 1 **dadurch gekennzeichnet, dass** die olefinisch ungesättigte Carbonsäure für die Verbindung gemäß Formel (I) ausgewählt wird aus Acrylsäure, Methacrylsäure, Itaconsäure, Crotonsäure, Maleinsäure, Maleinsäurehalbester, Fumarsäure, Fumarsäurehalbester, reaktive carboxylgruppenhaltige Makromonomere oder deren Mischungen.

3. Zusammensetzung nach Anspruch 1 **dadurch gekennzeichnet, dass** das oder die Comonomeren ausgewählt wird/werden aus Veresterungsprodukten von C₂- bis C₃₆-Diolen, Polyalkylenglycol-Diolen, C₃- bis C₁₂-Triolen, Trisalkoxylaten von C₃- bis C₁₂-Triolen, Polyesterpolyolen oder Polyepoxiden mit den olefinisch ungesättigten Carbonsäuren gemäß Anspruch 2 oder Umsetzungsprodukten aus Polyurethanen mit freien Isocyanatgruppen mit OH-funktionellen Alkyl(meth)acrylaten oder deren Mischungen.

4. Zusammensetzung nach einem der vorhergehenden Ansprüche enthaltend
a) 1 bis 40 Gew. % Organo-Titan-, -Silicium- und / oder -Zirconium-Verbindungen gemäß Formel (I),
b) 20 bis 95 Gew. %, vorzugsweise 40 bis 90 Gew. %, Comonomer mit mindestens 2 Doppelbindungen pro Molekül,
c) bis 40 Gew. % Comonomer mit 1 Doppelbindung pro Molekül,
d) 0,1 bis 10 Gew. % eines Initiators oder einer Mischung von Initiatoren,
e) 0 bis 30 Gew. % weitere Additive und Hilfsstoffe.

5. Verfahren zur Herstellung der Zusammensetzungen gemäß einem der vorhergehenden Ansprüche **dadurch gekennzeichnet, dass** die Monomeren ggf. unter Zusatz von Stabilisatoren unter Rühren miteinander bis zur Homogenität gemischt werden und anschließend der/die Initiatoren zugefügt wird / werden.

6. Verfahren zur korrosionsschützenden Behandlung von Stahl, der ggf. mit einer metallischen Beschichtung aus Zink, Aluminium, Kupfer, Nickel oder ähnlichen Metallen versehen ist, oder Aluminium oder dessen Legierung, das die folgenden wesentlichen Verfahrensschritte beinhaltet:
a) die Oberfläche des Substrates wird für die Zeitdauer zwischen 0,5 und 60 Sekunden bei einer Behandlungstemperatur zwischen 10 und 50 °C, vorzugsweise 15 und 35 °C, mit einer Zusammensetzung nach Anspruch 1 bis 4 in Kontakt gebracht;
b) das überschüssige Korrosionsschutzmittel wird ggf. von der Oberfläche entfernt und
c) durch geeignete Energiezufuhr für einen Zeitraum von 0,1 bis 120 Sekunden wird eine Vernetzung des polymeren Films und seine Verankerung auf der Metalloberfläche bewirkt.

7. Verfahren zur Beschichtung von metallischen Werkstoffen, **gekennzeichnet durch** die folgenden wesentlichen Schritte
- ggf. Reinigen und Entfetten des metallischen Werkstoffs,
- ggf. Spülen der Oberfläche,
- ggf. Trocknen der Oberfläche,
- Beschichten der Oberfläche mit einer Zusammensetzung gemäß mindestens einem der Ansprüche 1 bis 4, so dass nach der Aushärtung eine Beschichtung mit einer flächenbezogenen Masse von 0,1 bis 20 g/m², vorzugsweise 0,5 bis 5 g/m² enthalten wird,
- Aushärtung der Beschichtung **durch** Photo- und/oder Elektronenstrahl-Polymerisation, die ggf. **durch** Zufuhr thermischer Energie unterstützt werden kann.

8. Verfahren zur Beschichtung von ggf. metallisch beschichtetem Bandstahl, Aluminium oder dessen Legierungen, **gekennzeichnet durch** die folgenden wesentlichen Schritte
- ggf. Reinigen und Entfetten des metallischen Bandes,
- ggf. Spülen der Oberfläche,
- ggf. Trocknen der Oberfläche,
- Beschichten der Oberfläche mit einer Zusammensetzung gemäß mindestens einem der Ansprüche 1 bis 4, so dass nach der Aushärtung eine Beschichtung mit einer flächenbezogenen Masse von 0,1 bis 20 g/m², vorzugsweise 0,5 bis 5 g/m² enthalten wird,
- Aushärtung der Beschichtung **durch** Photo- und/oder Elektronenstrahl-Polymerisation, die ggf **durch** Zufuhr thermischer Energie unterstützt werden kann.

## Claims

1. Polymerizable, chromium-free composition for the organic coating of metallic materials, comprising
a) at least one compound of the general formula (I) 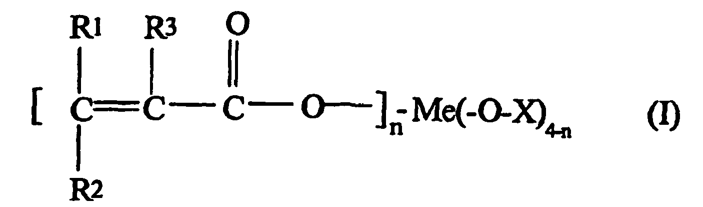
in which R¹ and/or R² are H, C₁ to C₁₂ alkyl, aralkyl or the group -CO-O-Y,
R³ is H or C₁ to C₁₂ alkyl,
Me is a titanium, silicon or zirconium ion,
X is H, C₁ to C₁₂ alkyl, aryl or aralkyl, alkoxy, aroxy, sulphonyl, phosphate or pyrophosphate,
Y is H, C₁ to C₁₂ alkyl or Me, and n is 0 to 4,
b) at least one further olefinically unsaturated comonomer having at least two olefinically unsaturated double bonds per molecule,
c) further comonomers having one olefinically unsaturated double bond per molecule,
d) at least one initiator for free-radical and/or cationic polymerization, at least one initiator being capable of activation by radiation containing no additional solvent.

2. Composition according to Claim 1, **characterized in that** the olefinically unsaturated carboxylic acid for the compound of formula (I) is selected from acrylic acid, methacrylic acid, itaconic acid, crotonic acid, maleic acid, maleic monoesters, fumaric acid, fumaric monoesters, reactive macromonomers containing carboxyl groups, or mixtures thereof.

3. Composition according to Claim 1, **characterized in that** the comonomer or comonomers is or are selected from esterification products of C₂ to C₃₆ diols, polyalkylene glycol diols, C₃ to C₁₂ triols, trisalkoxylates of C₃ to C₁₂ triols, polyester polyols or polyepoxides with the olefinically unsaturated carboxylic acids according to Claim 2, or reaction products of polyurethanes having free isocyanate groups with OH-functional alkyl (meth) acrylates, or mixtures thereof.

4. Composition according to any one of the preceding claims, containing
a) 1% to 40% by weight, of organotitanium, organosilicon and/or organozirconium compounds of formula (I),
b) 20% to 95% by weight, preferably 40% to 90% by weight, of comonomer having at least 2 double bonds per molecule,
c) up to 40% by weight of comonomer having 1 double bond per molecule,
d) 0.1 % to 10% by weight of an initiator or of a mixture of initiators,
e) 0% to 30% by weight of further additives and auxiliaries.

5. Method for the production of the compositions according to any one of the preceding claims, **characterized in that** the monomers are mixed with one another with stirring, optionally with addition of stabilizers, until a state of homogeneity is reached and subsequently the initiator or initiators is or are added.

6. Method for the corrosion control treatment of steel with or without a metallic coating of zinc, aluminium, copper, nickel or similar metals, or aluminium or an alloy thereof, which comprises the following main steps:
a) the surface of the substrate is contacted for a time between 0.5 and 60 seconds at a treatment temperature between 10 and 50° C, preferably 15 and 35°C, with a composition according to Claim 1 to 4;
b) the excess corrosion control agent is optionally removed from the surface; and
c) by means of suitable supply of energy for a time of 0.1 to 120 seconds, the polymer film is crosslinked and is anchored on the metal surface.

7. Method for the coating of metallic materials, **characterized by** the following main steps:
- optional cleaning and degreasing of the metallic material,
- optional rinsing of the surface,
- optional drying of the surface,
- coating of the surface with a composition according to at least one of Claims 1 to 4 to give, after curing, a coating having a mass per unit area of 0.1 to 20 g/m², preferably 0.5 to 5 g/m²,
- curing of the coating by photopolymerization and/or electron-beam polymerization, possibly assisted, optionally, by supply of thermal energy.

8. Method for the coating of uncoated or metallically coated strip steel, aluminium or its alloys, **characterized by** the following main steps:
- optional cleaning and degreasing of the metallic strip,
- optional rinsing of the surface,
- optional drying of the surface,
- coating of the surface with a composition according to at least one of Claims 1 to 4 to give, after curing, a coating having a mass per unit area of 0.1 to 20 g/m², preferably 0.5 to 5 g/m²,
- curing of the coating by photopolymerization and/or electron-beam polymerization, possibly assisted, optionally, by supply of thermal energy.

## Revendications

1. Composition polymérisable exempte de chrome pour le revêtement organique de matériaux métalliques contenant
(a) au moins un composé de formule générale (I) 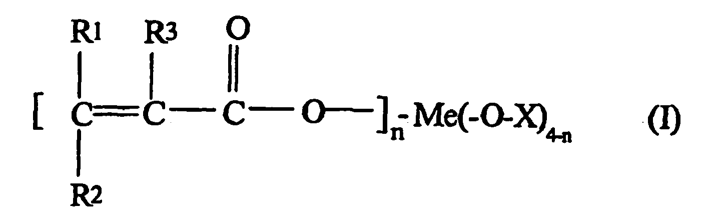
dans laquelle R¹ et/ou R² représente un atome de H, un groupe alkyle en C₁ à C₁₂, un groupe aralkyle ou le groupe -CO-O-Y,
R³ = un atome de H ou un groupe alkyle en C₁ à C₁₂,
Me = un ion titane, silicium ou zirconium,
X = un atome de H, un groupe alkyle en C₁ à C₁₂, aryle ou aralkyle, alcoxyle, aroxyle, sulfonyle, phosphate, pyrophosphate,
Y = un atome de H, un groupe alkyle en C₁ à C₁₂, ou Me, et n = 0 à 4 ;
(b) au moins un comonomère supplémentaire à insaturation oléfinique ayant au moins deux double liaisons d'insaturation oléfinique par molécule,
(c) des comonomères supplémentaires ayant une double liaison d'insaturation oléfinique par molécule,
(d) au moins un amorceur pour une polymérisation par voie radicalaire et/ou cationique, au moins un amorceur pouvant être activé par irradiation ne contenant aucun solvant supplémentaire.

2. Composition selon la revendication 1, **caractérisée en ce que** l'acide carboxylique à insaturation oléfinique pour le composé selon la formule (I), est choisi parmi l'acide acrylique, l'acide méthacrylique, l'acide itaconique, l'acide crotonique, l'acide maléique, les demi-esters d'acide maléique, l'acide fumarique, les demi-esters d'acide fumarique, les macromonomères réactifs contenant des groupes carboxyle ou leurs mélanges.

3. Composition selon la revendication 1, **caractérisée en ce que** le ou les comonomères sont choisis parmi les produits d'estérification de diols en C₂ à C₃₆, de polyalkylèneglycol-diols, de triols en C₃ à C₁₂, de tri-alcoxylates de triols en C₃ à C₁₂, de polyesterpolyols ou de polyépoxydes avec les acides carboxyliques à insaturation oléfinique selon la revendication 2 ou les produits de réaction de polyuréthanes ayant des groupes isocyanate libres avec des alkyl(méthacrylates) à fonctionnalité OH ou leurs mélanges.

4. Composition selon l'une quelconque des revendications précédentes, contenant
a) 1 à 40% en poids, de composés organiques du titane, du silicium, et/ou du zirconium, selon la formule (I),
b) 20 à 95% en poids, de préférence 40 à 90% en poids, de comonomères ayant au moins deux double liaisons par molécule,
c) jusqu'à 40% en poids de comonomères ayant une double liaison par molécule,
d) 0,1 à 10% en poids d'une amorceur ou d'un mélange d'amorceurs,
e) 0 à 30% en poids d'adjuvants et d'additifs supplémentaires.

5. Procédé pour préparer les compositions selon l'une quelconque des revendications précédentes, **caractérisé en ce que** les monomères sont mélangés entre eux sous agitation jusqu'à homogénéité, éventuellement avec ajout de stabilisants, puis le ou les amorceurs y sont ajoutés.

6. Procédé pour traiter contre la corrosion, l'acier, qui est éventuellement pourvu d'un revêtement métallique de zinc, d'aluminium, de cuivre, de nickel, ou de métaux similaires, ou l'aluminium ou son alliage, qui contient les étapes de procédé essentielles suivantes :
a) la surface du substrat est mise en contact avec une composition selon les revendications 1 à 4 pendant une durée comprise entre 0,5 et 60 secondes, à une température de traitement comprise entre 10 et 50°C, de préférence 15 et 35°C ;
b) l'agent anti-corrosion en excès est éliminé éventuellement de la surface et
c) on provoque une réticulation du film polymère et son ancrage sur la surface métallique au moyen d'un apport d'énergie approprié, pendant une durée de 0,1 à 120 secondes.

7. Procédé pour revêtir des matériaux métalliques, **caractérisé par** les étapes essentielles suivantes
- éventuellement un nettoyage et dégraissage du matériau métallique,
- éventuellement un rinçage de la surface,
- éventuellement un séchage de la surface,
- un revêtement de la surface par une composition selon au moins l'une quelconque des revendications 1 à 4, de sorte qu'après durcissement, une couche est contenue ayant une masse surfacique de 0,1 à 20 g/m², de préférence de 0,5 à 5 g/m²,
- durcissement du revêtement au moyen d'une polymérisation par photo-irradiation et/ou irradiation électronique, qui éventuellement peut être assistée par un apport d'énergie thermique

8. Procédé pour revêtir l'acier feuillard, l'aluminium ou ses alliages, éventuellement revêtus de métal, **caractérisé par** les étapes essentielles suivantes
- éventuellement un nettoyage et dégraissage du feuillard métallique,
- éventuellement un rinçage de la surface,
- éventuellement un séchage de la surface,
- un revêtement de la surface par une composition selon au moins l'une quelconque des revendications 1 à 4, de sorte qu'après durcissement, une couche est contenue ayant une masse surfacique de 0,1 à 20 g/m², de préférence de 0,5 à 5 g/m²,
- durcissement du revêtement au moyen d'une polymérisation par photo-irradiation et/ou irradiation électronique, qui éventuellement peut être assistée par un apport d'énergie thermique.
